# EUROPEAN PATENT SPECIFICATION

(11) **EP 4 588 729 B1**
(45) Date of publication and mention of the grant of the patent: **22.04.2026**
(21) Application number: 25150888.3
(22) Date of filing: 09.01.2025
(51) Int. Cl.: B60S 1/34

(54) **WIPER ARM**
WISCHERARM
BRAS D'ESSUIE-GLACE

(30) Priority: 22.01.2024 JP 2024007628
(43) Date of publication of application: 23.07.2025
(73) Proprietor: Mitsuba Corporation, Kiryu-shi, Gunma 376-8555 (JP)
(72) Inventor: NAKAJIMA, Nobutaka, Kiryu-shi, Gunma, 3768555 (JP); KOGUCHI, Yasuaki, Kiryu-shi, Gunma, 3768555 (JP); SODA, Toru, Kiryu-shi, Gunma, 3768555 (JP)
(74) Representative: Kurig, Thomas

(56) References cited:
- FR-A1- 3 064 961
- US-A1- 2017 320 467
- US-B2- 10 676 068

## Description

### Technical Field

The disclosure relates to a wiper arm provided in a wiper device that wipes a wiping surface.

### Related Art

A wiper device is mounted on a vehicle such as an automobile. The wiper device includes: a wiper arm, including an arm body, an arm head, and a head cover, and swung by drive of a wiper motor; and a wiper blade, mounted on the wiper arm and wiping a wiping surface.

As an example of the wiper arm provided in the wiper device, Japanese Patent Laid-Open No. 2014-101059 discloses a wiper arm in which the arm body is rotatably connected to the arm head.

In the wiper arm including the arm body, the arm head connected to the arm body, and the head cover covering the arm head, the arm body and the arm head are each molded from resin.

Accordingly, depending on molding accuracy or molding state, rattling is likely to occur at a connecting part between the arm body and the arm head.

Hence, due to the rattling at the connecting part, the parts interfere with each other, resulting in a sound (rattling sound) different from normal.

During driving of the wiper arm, in addition to the rattling of the arm body and the arm head at the connecting part, the vibration from the wiper motor is transmitted to the connecting part, and is transmitted via the arm body to the wiper blade attached to the arm body, becoming one of the causes of vibration (chattering) occurring in the wiper blade.

There is a risk that the sound (rattling sound) different from normal due to rattling and the chattering caused by the transmission of rattling and vibration from the wiper motor may give discomfort to a user and may reduce the quality of the wiper arm.

It is conceivable to suppress the rattling at the connecting part by the head cover. However, since the vibration from the wiper motor is also transmitted to the head cover, it is not easy to suppress the rattling at the connecting part by the head cover.

Japanese Patent Laid-Open No. 2014-101059 describes mounting the head cover on the arm head, but does not describe how to prevent the rattling at the connecting part by the head cover. US 10 676068 B2 discloses a wiper arm according to the preamble of claim 1.

### SUMMARY

One aspect of the disclosure provides a wiper arm including: an arm head; a cover covering the arm head; and an arm body rotatably connected to the arm head. The cover includes a top wall and wall parts connected to the top wall and facing each other. The top wall includes a fastening part extending toward the arm head side in a height direction of the cover. The wall parts each include a protruding part extending toward the arm head side in a width direction of the cover. The arm body includes a connecting part that is able to be connected to the arm head. The arm head is covered by the cover in a state in which the arm body and the arm head are connected by the connecting part. By one portion of the fastening part being engaged with the arm head, the other portion of the fastening part is brought into contact with the connecting part, and the protruding part is brought into contact with the arm head.

### BRIEF DESCRIPTION OF THE DRAWINGS

FIG. 1 is a plan view showing an external structure of a wiper device including a wiper arm according to an embodiment of the disclosure.
FIG. 2 is a side view showing a structure of the wiper device shown in FIG. 1.
FIG. 3 is a bottom view showing a structure of the wiper device shown in FIG. 1.
FIG. 4 is an enlarged partial bottom view showing a structure of part A shown in FIG. 3.
FIG. 5 is an enlarged partial cross-sectional view showing a structure of a connecting part between an arm head and an arm body in the wiper arm shown in FIG. 1.
FIG. 6 is a plan view showing a structure of the arm head in the wiper arm shown in FIG. 1.
FIG. 7 is a perspective view showing a structure of the arm head shown in FIG. 6.
FIG. 8 is a side view showing a structure of a cover in the wiper arm shown in FIG. 1.
FIG. 9 is a bottom view showing the structure of the cover shown in FIG. 8.
FIG. 10 is a perspective view showing an internal structure of the cover shown in FIG. 8.
FIG. 11 is a partial side view showing an open/closed state of the cover in the wiper arm shown in FIG. 1.
FIG. 12 is a partial side view showing a cover lifting operation during an opening operation of the cover shown in FIG. 11.

### DESCRIPTION OF THE EMBODIMENTS

An object of the disclosure is to provide a wiper arm with improved quality.

One aspect of the disclosure provides a wiper arm including: an arm head; a cover covering the arm head; and an arm body rotatably connected to the arm head. The cover includes a top wall and wall parts connected to the top wall and facing each other. The top wall includes a fastening part extending toward the arm head side in a height direction of the cover. The wall parts each include a protruding part extending toward the arm head side in a width direction of the cover. The arm body includes a connecting part that is able to be connected to the arm head. The arm head is covered by the cover in a state in which the arm body and the arm head are connected by the connecting part. By one portion of the fastening part being engaged with the arm head, the other portion of the fastening part is brought into contact with the connecting part, and the protruding part is brought into contact with the arm head.

In another aspect of the disclosure, the arm head includes an accommodation part that is able to accommodate one portion of the fastening part.

In another aspect of the disclosure, the arm body includes arm wall parts arranged facing each other. The connecting part includes a shaft part extending along a width direction of the arm body and connecting the arm wall parts that face each other. By one portion of the fastening part being engaged with the arm head, the other portion of the fastening part is brought into contact with the shaft part.

In another aspect of the disclosure, the arm head includes a convex part provided on a side surface of the arm head. The protruding part includes a groove fitted with the convex part, and a hollow part provided outside the groove in the width direction of the cover.

According to the disclosure, the quality of the wiper arm can be improved.

Hereinafter, an embodiment of the disclosure is described in detail with reference to the drawings.

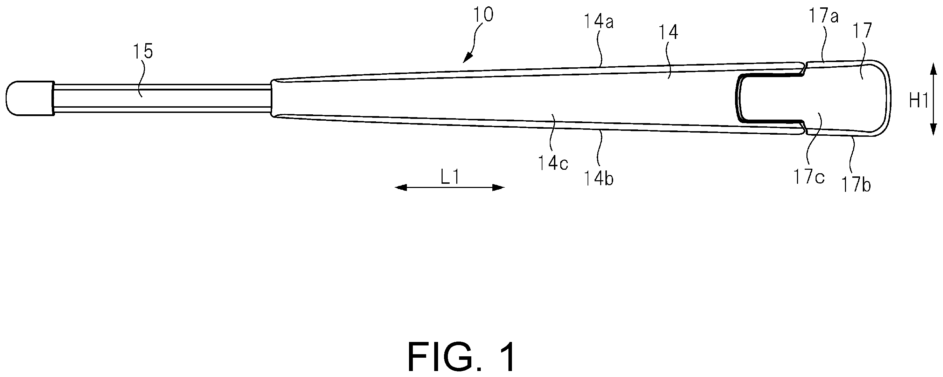

A wiper device 10 shown in FIG. 1 to FIG. 3 is, for example, a device that wipes a wiping surface such as a rear glass provided on a vehicle such as an automobile. The wiper device 10 includes: a wiper arm 11, including an arm body 14; a support 12, attached to a tip side of the arm body 14; and a wiper blade 15, attached to the support 12 and including a blade rubber 16 that wipes the wiping surface. The wiper blade 15 is rotatably supported by the support 12.

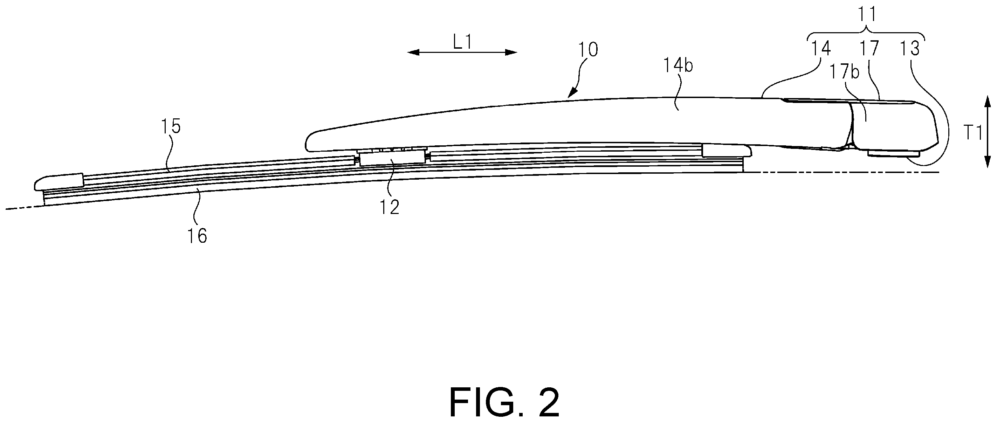

The wiper arm 11 shown in FIG. 2 includes the arm body 14, an arm head 13 that rotatably supports the arm body 14, and a cover 17 that covers the arm head 13. That is, the arm body 14 is rotatably connected to the arm head 13.

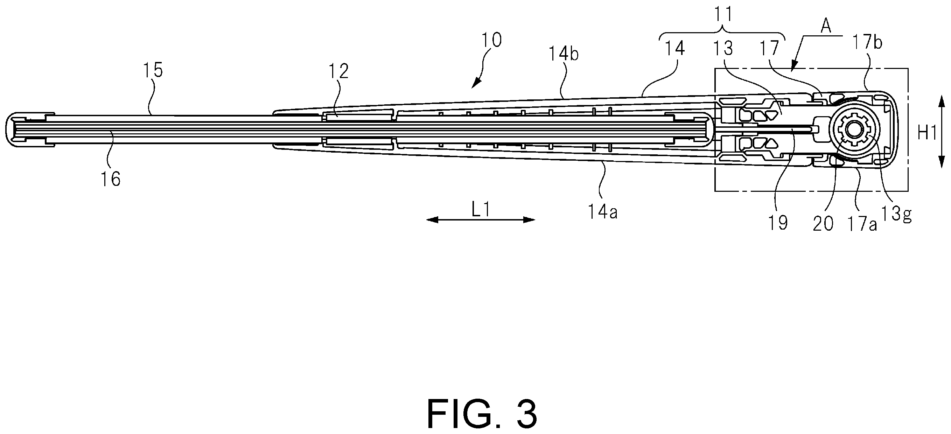

As shown in FIG. 3, on a base end side (opposite to a tip side) of the wiper arm 11, a fixed part 13g is provided where an output shaft of a wiper motor (not shown) that drives the wiper device 10 is fixed. Specifically, the output shaft of the wiper motor is fixed to a metal fixing member 20 embedded in the fixed part 13g of the arm head 13.

By switching on a wiper switch provided in a vehicle compartment or the like, the output shaft of the wiper motor is rotated in forward and reverse directions, and the wiper arm 11 swings. Accordingly, the blade rubber 16 attached to the wiper blade 15 shown in FIG. 1 performs a reciprocating wiping operation in a predetermined wiping range on the wiping surface such as the rear glass. As a result, rainwater or the like adhering to the wiping surface such as the rear glass is wiped off.

A pressing force acts on the arm body 14 of the wiper arm 11 in a direction in which the arm body 14 falls down toward the wiping surface such as the rear glass. Accordingly, the wiper blade 15 does not fall off during the reciprocating wiping operation of the wiper blade 15. The pressing force is generated by a spring force of a tension spring 19 provided on a base end side of the arm body 14 shown in FIG. 3.

As shown in FIG. 1 to FIG. 4, in the wiper arm 11 of the present embodiment, the arm body 14 is rotatably attached to a tip of the arm head 13. The cover 17 that covers the arm head 13 is provided on the outside of the arm head 13. The cover 17 is provided to prevent the design of the wiper arm 11 from being damaged, and is of an external shape matching an external shape of the arm body 14.

Here, a schematic shape of each of the main constituent members constituting the wiper arm 11 is described.

The arm body 14 is, for example, made of resin, and is an elongated member extending along a longitudinal direction L1. The arm body 14 includes a wall part 14a and a wall part 14b which are arm wall parts arranged facing each other, as well as a top wall 14c connected to the wall parts 14a and 14b. That is, the shape of a cross section of the arm body 14 in a direction orthogonal to the longitudinal direction L1 is U-shape, and one end of the spring 19 is attached to the inside of the arm body 14. The other end of the spring 19 is attached to the arm head 13.

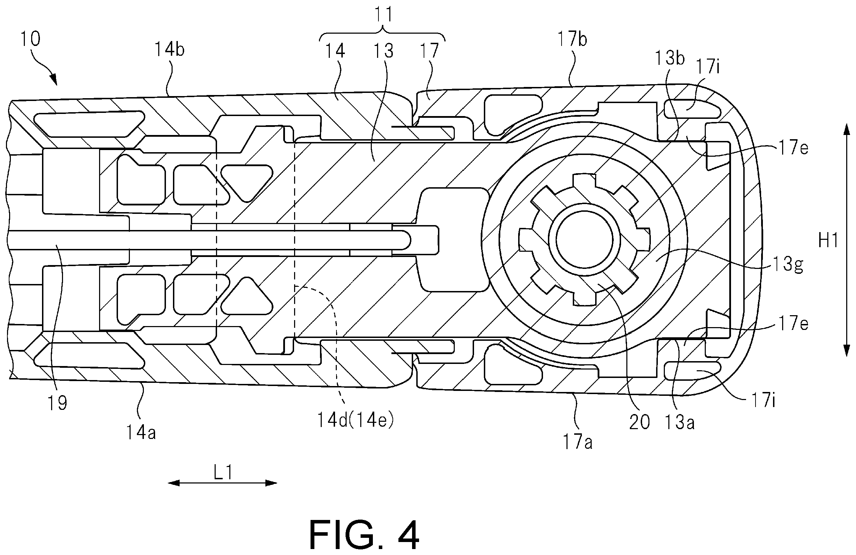

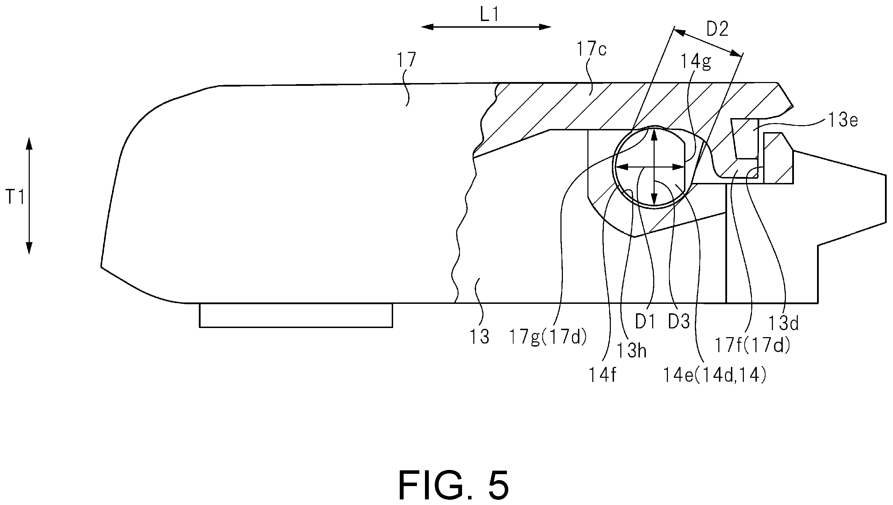

As shown in FIG. 4 and FIG. 5, the arm body 14 includes a connecting part 14d that can be connected to the arm head 13. The connecting part 14d includes a shaft part 14e extending along a width direction H1 of the arm body 14 and connecting the wall parts 14a and 14b that face each other. That is, the arm body 14 is rotatably connected to the arm head 13 at the shaft part 14e included in the connecting part 14d of the arm body 14.

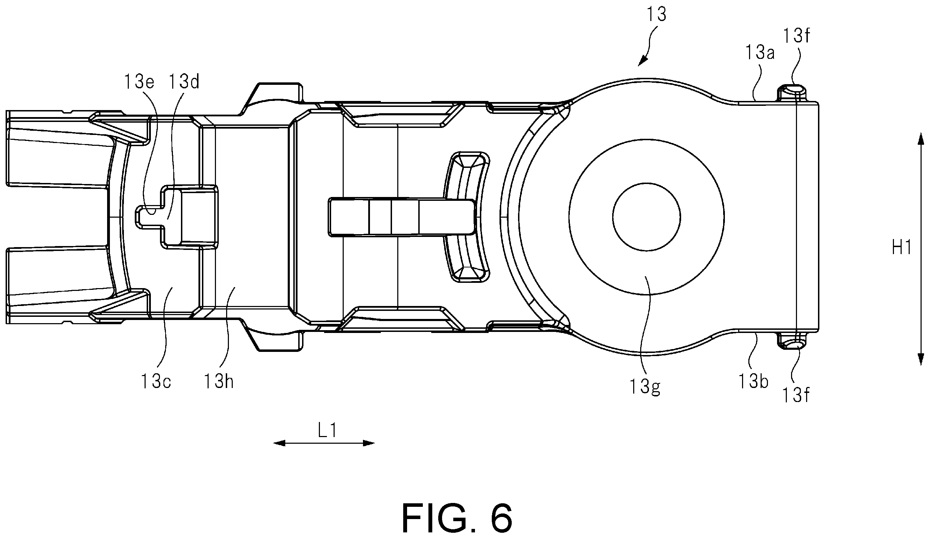

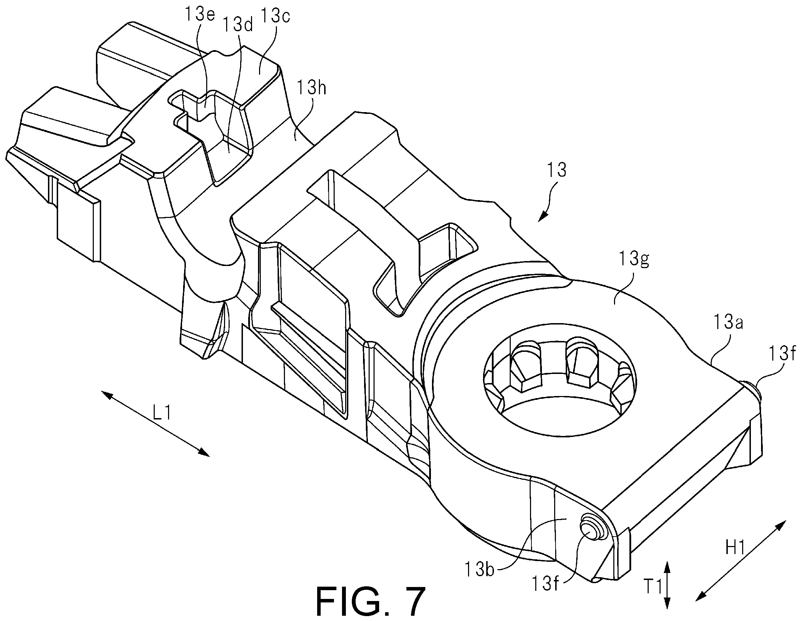

The arm head 13 is, for example, made of resin. As shown in FIG. 6 and FIG. 7, the arm head 13 is an elongated box-shaped member extending along the longitudinal direction L1. The arm head 13 includes: a side surface 13a, arranged on one side in the width direction H1; a side surface 13b, arranged on the other side opposite to the side surface 13a; and a top surface 13c, connected to upper ends of the side surface 13a and the side surface 13b, respectively.

The arm head 13 includes a connecting groove 13h. By the connecting groove 13h, the arm head 13 is connected to the shaft part 14e of the connecting part 14d of the arm body 14.

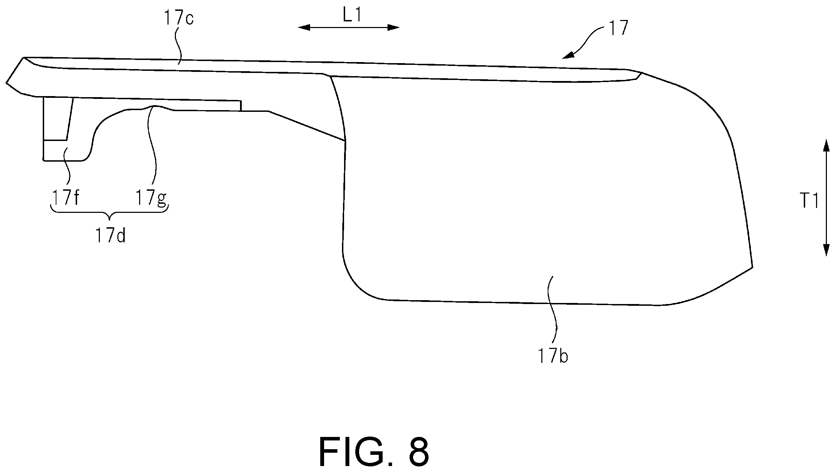

The cover 17 is, for example, made of resin. As shown in FIG. 8 to FIG. 10, the cover 17 is formed in a kamaboko-like shape (or horizontal U-shape) so as to cover the arm head 13. Specifically, the cover 17 includes: a wall part 17a, arranged on one side in the width direction H1; a wall part 17b, arranged on the other side in the width direction H1 and facing the wall part 17a; and a top wall 17c, connected to upper ends of the wall part 17a and the wall part 17b, respectively. The kamaboko-like shape is formed by the wall part 17a, the wall part 17b, and the top wall 17c. Accordingly, in a state in which the cover 17 covers the arm head 13, the wall part 17a of the cover 17 covers the side surface 13a of the arm head 13, and the wall part 17b of the cover 17 covers the side surface 13b of the arm head 13.

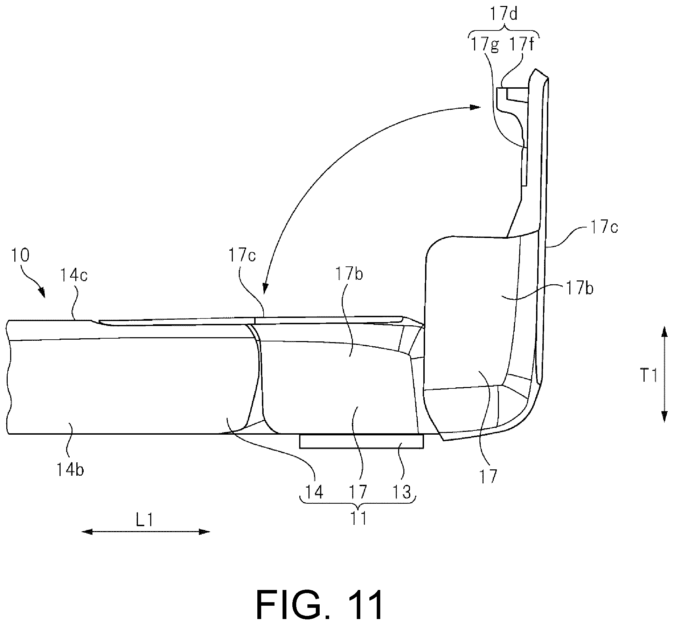

As shown in FIG. 11, the cover 17 is rotatably attached to the arm head 13 on a base end side of the arm head 13. Since the cover 17 is rotatably attached, when the wiper device 10 is assembled to an automobile, the cover 17 can be fastened by a bolt (not shown) while in an open state. Accordingly, it is possible to fix the arm head 13.

As shown in FIG. 6 and FIG. 7, a convex part 13f is provided on each of the side surfaces 13a and 13b on the base end side of the arm head 13.

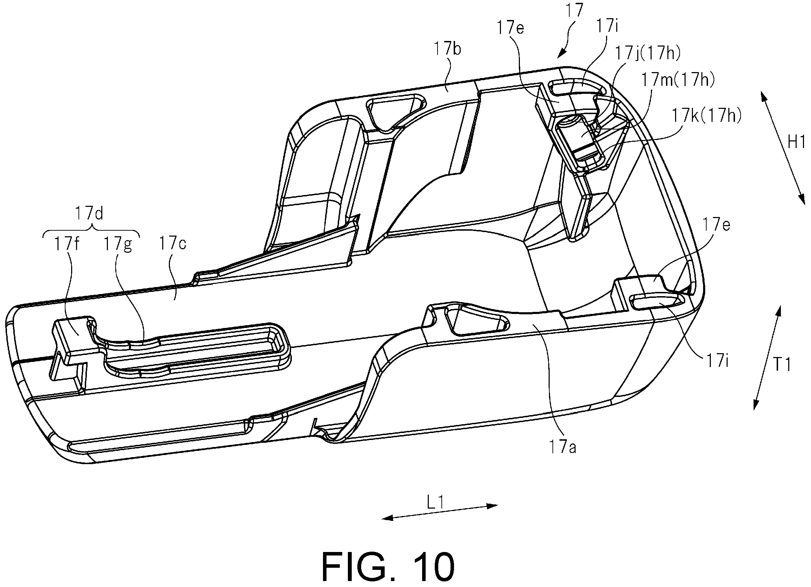

On the other hand, as shown in FIG. 10, a protruding part 17e that protrudes inward is provided on an inner wall of each of the wall parts 17a and 17b on a base end side of the cover 17. Furthermore, an elongated groove 17h is formed along an inner wall of the protruding part 17e. The convex part 13f of each of the side surfaces 13a and 13b of the arm head 13 is fitted into the groove 17h provided on the protruding part 17e of the inner wall of each of the wall parts 17a and 17b of the cover 17. Accordingly, the cover 17 is rotatable about the convex part 13f of the arm head 13 as a rotation axis.

Next, the connecting part 14d shown in FIG. 5, where the arm body 14 and the arm head 13 are connected, will be described in detail. The connecting part 14d of the arm body 14 includes the shaft part 14e that connects the wall part 14a and the wall part 14b. That is, the shaft part 14e of the arm body 14 is engaged with the connecting groove 13h of the arm head 13 that is of a semicircular shape. Accordingly, the connecting part 14d is formed. The shaft part 14e is rotatably engaged with the connecting groove 13h. Accordingly, the arm body 14 is rotatably connected to the arm head 13 at the connecting part 14d.

The shape of a cross section of the shaft part 14e in a direction orthogonal to an extension direction of the shaft part 14e includes an arc-shaped part 14f and a planar part 14g. In this case, in the shape of the cross section of the shaft part 14e and the shape of the semicircular connecting groove 13h of the arm head 13, if D1 is a length of an axial diameter of the planar part 14g, D3 is a length of an axial diameter of the arc-shaped part 14f, and D2 is a length of an entrance of the connecting groove 13h, then D1<D2<D3.

Accordingly, when the arm body 14 and the arm head 13 are connected with each other or when the arm body 14 and the arm head 13 are disconnected from each other, it is possible to attach and detach the arm body 14 to and from the arm head 13 only at a position where the length D1 of the axial diameter of the planar part 14g overlaps the length D2 of the entrance of the connecting groove 13h in a rotational position of the shaft part 14e.

On the other hand, in the rotational position of the shaft part 14e, at a position where the length D1 of the axial diameter of the planar part 14g does not overlap the length D2 of the entrance of the connecting groove 13h, that is, a position where the length D3 of the axial diameter of the arc-shaped part 14f overlaps the length D2 of the entrance of the connecting groove 13h, since the shaft part 14e does not come out of the connecting groove 13h, the arm body 14 is rotatable with respect to the arm head 13.

Next, a detailed structure of the cover 17 and the arm head 13 in the present embodiment will be described. As shown in FIG. 8 to FIG. 10, the top wall 17c of the cover 17 includes a fastening part 17d that extends toward the arm head 13 side in a height direction T1 of the cover 17. Furthermore, the wall parts 17a and 17b of the cover 17 each include the protruding part 17e that extends toward the arm head 13 side in the width direction H1 of the cover 17.

Specifically, as shown in FIG. 8, on an inner wall of the top wall 17c of the cover 17, a fixing claw 17f and a stick-out part 17g are provided protruding downward in the height direction T1 of the cover 17. That is, the fastening part 17d of the cover 17 is a portion that protrudes downward in the height direction T1 of the cover 17 at a position on the tip side opposite to a base end of an inner wall of the cover 17, and is composed of the fixing claw (one portion) 17f and the stick-out part (other portion) 17g.

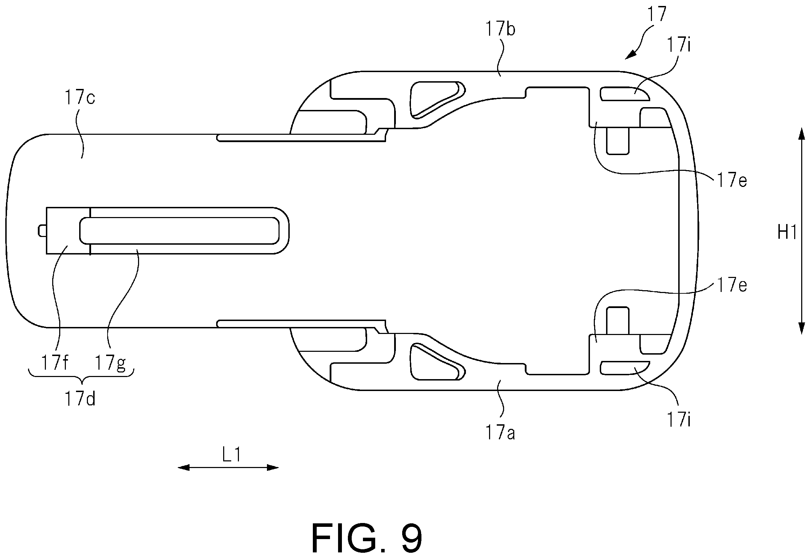

The fixing claw 17f extends and protrudes further downward than the stick-out part 17g. As shown in FIG. 9 and FIG. 10, the stick-out part 17g extends along the inner wall of the top wall 17c, and is formed in a U-shape in plan view of the inner wall of the top wall 17c.

The protruding part 17e of the cover 17 is a portion that protrudes inward of the cover 17 from each of the wall parts 17a and 17b of the cover 17 at the base end of the cover 17. That is, the protruding part 17e is a portion that protrudes inward from the inner wall of each of the wall parts 17a and 17b of the cover 17 at the base end of the cover 17.

The protruding part 17e is formed in an elongated box shape on the inner wall of each of the wall parts 17a and 17b.

As shown in FIG. 6 and FIG. 7, the arm head 13 includes an accommodation part 13d that is able to accommodate one portion of the fastening part 17d of the cover 17 shown in FIG. 8. Specifically, the arm head 13 includes the accommodation part 13d provided recessed on the top surface 13c on the side (tip side) opposite to the base end. The accommodation part 13d is able to accommodate the fixing claw 17f being one portion of the fastening part 17d of the cover 17.

An engagement part 13e that blocks a portion of the recessed accommodation part 13d is provided in the accommodation part 13d. When the fixing claw 17f of the fastening part 17d of the cover 17 is accommodated in the accommodation part 13d of the arm head 13, since the fixing claw 17f is caught in the engagement part 13e, the fixing claw 17f is prevented from easily coming out of the engagement part 13e.

As shown in FIG. 5, the stick-out part (other portion) 17g of the fastening part 17d of the cover 17 contacts the shaft part 14e of the arm body 14 at the connecting part 14d of the arm body 14. In other words, the fastening part 17d provided on the top wall 17c of the cover 17 contacts the shaft part 14e of the arm body 14.

That is, in the wiper arm 11 of the present embodiment, the arm head 13 is covered by the cover 17 in a state in which the arm body 14 and the arm head 13 are connected by the connecting part 14d. In this state, by engagement with the arm head 13, the fastening part 17d is brought into contact with the connecting part 14d, and the protruding part 17e is brought into contact with the arm head 13.

In detail, in a state in which the shaft part 14e of the arm body 14 is connected to the connecting groove 13h of the arm head 13 by the connecting part 14d, the arm head 13 is covered by the cover 17. In this state, the fixing claw 17f of the fastening part 17d of the cover 17 is accommodated in the accommodation part 13d of the arm head 13 and is engaged with the engagement part 13e. Furthermore, at the connecting part 14d, the stick-out part 17g of the cover 17 contacts the shaft part 14e of the arm body 14. In other words, the shaft part 14e of the arm body 14 is in a state of being contacted and pressed down from above by the stick-out part 17g of the cover 17.

In the state in which the arm head 13 is covered by the cover 17, the protruding part 17e provided on the inner wall of each of the wall parts 17a and 17b of the cover 17 contacts the arm head 13. Specifically, in the state in which the arm head 13 is covered by the cover 17, the protruding part 17e provided on the inner wall of the wall part 17a of the cover 17 contacts the side surface 13a of the arm head 13, and the protruding part 17e provided on the inner wall of the wall part 17b of the cover 17 contacts the side surface 13b of the arm head 13.

That is, in the state in which the arm head 13 is covered by the cover 17, the protruding part 17e of the wall part 17a of the cover 17 contacts the side surface 13a of the arm head 13, and the protruding part 17e of the wall part 17b of the cover 17 contacts the side surface 13b of the arm head 13. Accordingly, the cover 17 is fixed to the arm head 13 with high strength.

According to the above, in the state in which the arm head 13 is covered by the cover 17, at the connecting part 14d of the arm body 14, the stick-out part 17g of the cover 17 contacts the shaft part 14e of the arm body 14, and the shaft part 14e is pressed down from above with high strength by the stick-out part 17g of the cover 17. Furthermore, since the two protruding parts 17e on the left and right sides of the cover 17 contact the arm head 13, the cover 17 is fixed to the arm head 13 with high strength, and the cover 17 and the arm head 13 are integrated with each other.

As shown in FIG. 6 and FIG. 7, the convex part 13f is provided on each of the side surfaces 13a and 13b on the base end side of the arm head 13. As shown in FIG. 10, the protruding part 17e that includes the groove 17h into which the convex part 13f is fitted is provided on the inner wall of each of the wall parts 17a and 17b of the cover 17. Furthermore, the protruding part 17e provided on the inner wall of each of the wall parts 17a and 17b includes a hollow part 17i provided outside the groove 17h in the width direction H1 of the cover 17.

That is, the box-shaped protruding part 17e provided on the inner wall of each of the wall parts 17a and 17b is provided with the elongated groove 17h, and the hollow part 17i provided outside the groove 17h and separated by a wall from the groove 17h. The elongated groove 17h is provided with a concave part 17j, a step part 17m, and a concave part 17k provided from a lower side to an upper side of the cover 17. In the groove 17h, the step part 17m located between the concave part 17j located on the lower side and the concave part 17k located on the upper side is the highest.

When the cover 17 is opened and closed with respect to the arm head 13, the convex part 13f of the arm head 13, which is fitted into the elongated groove 17h of the cover 17, moves within the elongated groove 17h. For example, when the cover 17 is opened with respect to the arm head 13, the convex part 13f of the arm head 13 moves from the concave part 17k located on the upper side, climbs over the step part 17m in the middle, and moves to the concave part 17j located on the lower side. Conversely, when the cover 17 is closed with respect to the arm head 13, the convex part 13f of the arm head 13 moves from the concave part 17j located on the lower side, climbs over the step part 17m in the middle, and moves to the concave part 17k located on the upper side.

The above-mentioned opening and closing operations of the cover 17 will be described in connection with the fastening part 17d of the cover 17 and the accommodation part 13d of the arm head 13.

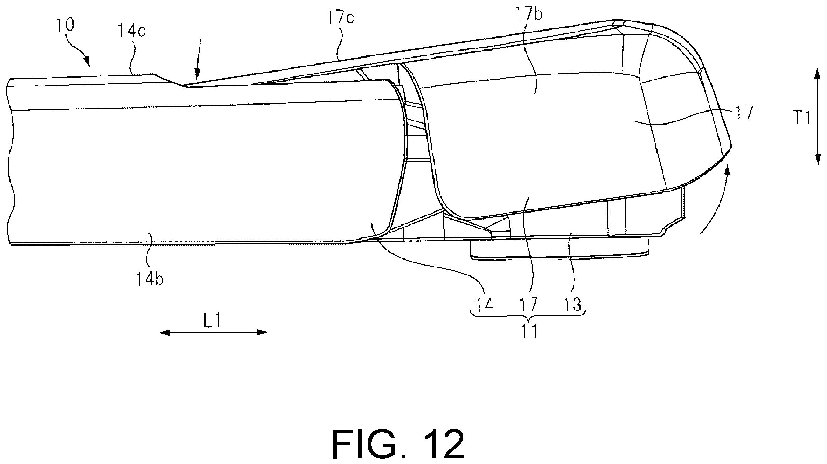

First, when the cover 17 is opened with respect to the arm head 13, a rear side (base end side) of the cover 17 is lifted upward, as shown in FIG. 12. Then, the convex part 13f on the outside of the side surfaces 13a and 13b of the arm head 13 shown in FIG. 6 moves within the groove 17h on the inside of the wall parts 17a and 17b of the cover 17 shown in FIG. 10, and the cover 17 moves slightly rearward with respect to the arm head 13.

Since the two protruding parts 17e on the inside of the cover 17 are in contact with the side surfaces 13a and 13b of the arm head 13, the convex part 13f of the arm head 13 does not move within the groove 17h of the cover 17 unless the rear side of the cover 17 is lifted upward and force is applied. That is, the cover 17 does not easily come off from the arm head 13 unless the rear side of the cover 17 is lifted upward and force is applied.

At this time, since the protruding part 17e provided on the inside of the cover 17 includes the hollow part 17i outside the groove 17h, when the rear side of the cover 17 is lifted upward and force is applied to the cover 17, the step part 17m within the groove 17h of the cover 17 pressed by the convex part 13f of the arm head 13 is depressed. Accordingly, the convex part 13f is able to move from the concave part 17k within the groove 17h, climb over the step part 17m, and move to the concave part 17j.

Generally, in a state in which no force is externally applied to the cover 17, the two protruding parts 17e of the cover 17 are in contact with the side surfaces 13a and 13b of the arm head 13, thereby integrating the arm head 13 and the cover 17 with high strength.

On the other hand, since the protruding part 17e provided on the inside of the cover 17 includes the hollow part 17i, the protruding part 17e has elastic force. Accordingly, when the rear side of the cover 17 is lifted upward and force is applied to the cover 17, the cover 17 is pressed by the convex part 13f of the arm head 13, and the step part 17m of the protruding part 17e of the cover 17 is depressed. Accordingly, the convex part 13f of the arm head 13 is able to move within the groove 17h, and is able to lift the rear side of the cover 17 upward, as shown in FIG. 12.

When the rear side of the cover 17 is lifted upward, a front side (arm body 14 side) of the cover 17 moves down to the lower side. Accordingly, the fixing claw 17f of the fastening part 17d of the cover 17 comes out of the engagement part 13e in the accommodation part 13d on the front side of the arm head 13. Subsequently, by lifting the front side of the cover 17 upward and rotating the cover 17 with respect to the arm head 13, the cover 17 can be opened, as shown in FIG. 11.

As described above, since the protruding part 17e provided on the cover 17 of the present embodiment has elastic force, the arm head 13 and the cover 17 can be integrated with each other with high strength. Also, by applying external force to the cover 17, the cover 17 can be detached from the arm head 13.

To close the cover 17 with respect to the arm head 13, a reverse operation of the above opening operation of the cover 17 is performed. That is, in the state in which the rear side of the cover 17 is lifted upward, the cover 17 is rotated with respect to the arm head 13 and is closed.

After that, the fixing claw 17f on the front side of the cover 17 is arranged in the accommodation part 13d on the front side of the arm head 13, force is applied to the rear side of the cover 17 and the cover 17 is pushed downward. Accordingly, the fixing claw 17f on the front side of the cover 17 is caught in the engagement part 13e of the accommodation part 13d on the front side of the arm head 13, and the closing operation of the cover 17 is completed.

According to the wiper arm 11 of the present embodiment, by providing the fastening part 17d on the front side (arm body 14 side) of the cover 17, when the cover 17 is closed with respect to the arm head 13, at the connecting part 14d of the arm body 14, the stick-out part 17g of the fastening part 17d of the cover 17 contacts the shaft part 14e of the arm body 14, and the shaft part 14e is pressed down from above with high strength by the stick-out part 17g of the cover 17.

Accordingly, rattling between the shaft part 14e of the arm body 14 and the connecting groove 13h of the arm head 13 where the shaft part 14e is arranged can be suppressed. That is, rattling in the height direction T1 at the connecting part 14d between the arm head 13 and the arm body 14 can be suppressed.

By providing the protruding part 17e on the inside of the cover 17, when the cover 17 is closed with respect to the arm head 13, the protruding part 17e contacts the side surfaces 13a and 13b of the arm head 13. Accordingly, the cover 17 is fixed to the arm head 13 with high strength, and the cover 17 and the arm head 13 can be integrated with each other. That is, rattling between the cover 17 and the arm head 13 in the width direction H1 can be suppressed.

Furthermore, by providing the protruding part 17e on the cover 17, when the cover 17 is closed with respect to the arm head 13, the cover 17 is fixed to the arm head 13 with high strength, and the cover 17 and the arm head 13 can be integrated with each other.

As a result, vibration from the wiper motor that swings the wiper arm 11 can be prevented from being transmitted to the connecting part 14d between the arm head 13 and the arm body 14. That is, in the state in which the cover 17 is closed with respect to the arm head 13, the rattling between the arm head 13 and the arm body 14 and the rattling between the arm head 13 and the cover 17 can both be suppressed at the same time.

Accordingly, the occurrence of a sound (rattling sound) different from normal caused by interference of parts due to the rattling at the connecting part 14d can be suppressed.

The vibration from the wiper motor during driving of the wiper arm can be prevented from being transmitted via the arm body 14 to the wiper blade 15, and the occurrence of chattering (vibration) of the wiper blade 15 can be suppressed.

According to the above, the quality of the wiper arm 11 can be improved.

According to the wiper arm 11 of the present embodiment, since the rattling at the connecting part 14d between the arm head 13 and the arm body 14 can be suppressed, the load on the wiper motor that swings the wiper arm 11 can be reduced. As a result, rotational efficiency of the wiper motor can be improved. Thus, it is possible to contribute to particularly Goal 7 ("ensure access to affordable, reliable, sustainable and modern energy for all") and Goal 13 ("take urgent action to combat climate change and its impacts") among the Sustainable Development Goals (SDGs) led by the United Nations.

It goes without saying that the disclosure is not limited to the above embodiments. For example, the above embodiment illustrates applying a wiper arm to a rear wiper device that wipes a wiping surface such as a rear glass of a vehicle such as an automobile. However, the disclosure is not limited thereto and may also be applied to a wiper device mounted on a front side of a vehicle such as an automobile, or a wiper device mounted on a ship, an aircraft, a railroad vehicle or the like.

### Description of Reference Numerals

10: wiper device; 11: wiper arm; 12: support; 13: arm head; 13a, 13b: side surface; 13c: top surface; 13d: accommodation part; 13e: engagement part; 13f: convex part; 13g: fixed part; 13h: connecting groove; 14: arm body; 14a, 14b: wall part (arm wall part); 14c: top wall; 14d: connecting part; 14e: shaft part; 14f: arc-shaped part; 14g: planar part; 15: wiper blade; 16: blade rubber; 17: cover; 17a, 17b: wall part; 17c: top wall; 17d: fastening part; 17e: protruding part; 17f: fixing claw (one portion); 17g: stick-out part (other portion); 17h: groove; 17i: hollow part; 17j, 17k: concave part; 17m: step part; 19: spring; 20: fixing member; D1, D2, D3: length; H1: width direction; L1: longitudinal direction; T1: height direction

## Claims

1. A wiper arm (11) comprising:
an arm head (13);
a cover (17), covering the arm head (13); and
an arm body (14), rotatably connected to the arm head (13), wherein
the cover (17) comprises a top wall (17c) and wall parts (17a, 17b) connected to the top wall (17c) and facing each other;
the top wall (17c) comprises a fastening part (17d) extending toward the arm head (13) side in a height direction (T1) of the cover (17);
the wall parts (17a, 17b) each comprise a protruding part (17e) extending toward the arm head (13) side in a width direction (H1) of the cover (17);
the arm body (14) comprises a connecting part (14d) that is able to be connected to the arm head (13);
the arm head (13) is covered by the cover (17) in a state in which the arm body (14) and the arm head (13) are connected by the connecting part (14d); the wiper arm being **characterised in that** by one portion (17f) of the fastening part (17d) being engaged with the arm head (13), an other portion (17g) of the fastening part (17d) is brought into contact with the connecting part (14d), and the protruding part (17e) is brought into contact with the arm head (13).

2. The wiper arm (11) according to claim 1, wherein
the arm head (13) comprises an accommodation part (13d) that is able to accommodate one portion (17f) of the fastening part (17d).

3. The wiper arm (11) according to claim 2, wherein
the arm body (14) comprises arm wall parts (14a, 14b) arranged facing each other;
the connecting part (14d) comprises a shaft part (14e) extending along a width direction (H1) of the arm body (14) and connecting the arm wall parts (14a, 14b) that face each other; and
by one portion (17f) of the fastening part (17d) being engaged with the arm head (13), an other portion (17g) of the fastening part (17d) is brought into contact with the shaft part (14e).

4. The wiper arm (11) according to claim 2 or 3, wherein
the arm head (13) comprises a convex part (13f) provided on a side surface (13a, 13b) of the arm head (13); and
the protruding part (17e) comprises a groove (17h) fitted with the convex part (13f), and a hollow part (17i) provided outside the groove (17h) in the width direction (H1) of the cover (17).

## Patentansprüche

1. Wischerarm (11), umfassend:
einen Armkopf (13);
eine Abdeckung (17), die den Armkopf (13) abdeckt; und
einen Armkörper (14), der drehbar mit dem Armkopf (13) verbunden ist, wobei
die Abdeckung (17) eine obere Wand (17c) und Wandteile (17a, 17b) umfasst, die mit der oberen Wand (17c) verbunden sind und einander gegenüberliegen;
die obere Wand (17c) ein Befestigungsteil (17d) umfasst, das sich in einer Höhenrichtung (T1) der Abdeckung (17) zur Seite des Armkopfes (13) erstreckt;
die Wandteile (17a, 17b) jeweils ein Vorsprungsteil (17e) umfassen, das sich in einer Breitenrichtung (H1) der Abdeckung (17) zur Seite des Armkopfes (13) erstreckt;
der Armkörper (14) ein Verbindungsteil (14d) umfasst, das mit dem Armkopf (13) verbunden werden kann;
der Armkopf (13) von der Abdeckung (17) in einem Zustand abgedeckt wird, in dem der Armkörper (14) und der Armkopf (13) durch das Verbindungsteil (14d) verbunden sind; wobei der Wischerarm **dadurch gekennzeichnet ist, dass**
durch einen Abschnitt (17f) des Befestigungsteils (17d), der mit dem Armkopf (13) in Eingriff steht, ein anderer Abschnitt (17g) des Befestigungsteils (17d) mit dem Verbindungsteil (14d) in Kontakt gebracht wird und das Vorsprungsteil (17e) mit dem Armkopf (13) in Kontakt gebracht wird.

2. Wischerarm (11) gemäß Anspruch 1, wobei
der Armkopf (13) ein Aufnahmeteil (13d) umfasst, das einen Abschnitt (17f) des Befestigungsteils (17d) aufnehmen kann.

3. Wischerarm (11) gemäß Anspruch 2, wobei
der Armkörper (14) Armwandteile (14a, 14b) umfasst, die einander gegenüberliegend angeordnet sind;
wobei das Verbindungsteil (14d) ein Schaftteil (14e) umfasst, das sich entlang einer Breitenrichtung (H1) des Armkörpers (14) erstreckt und die einander gegenüberliegenden Armwandteile (14a, 14b) verbindet; und
durch Eingriff eines Abschnitts (17f) des Befestigungsteils (17d) mit dem Armkopf (13) ein anderer Abschnitt (17g) des Befestigungsteils (17d) mit dem Schaftteil (14e) in Kontakt gebracht wird.

4. Wischerarm (11) gemäß Anspruch 2 oder 3, wobei
der Armkopf (13) ein konvexes Teil (13f) umfasst, das an einer Seitenfläche (13a, 13b) des Armkopfes (13) vorgesehen ist; und
das Vorsprungsteil (17e) eine Nut (17h), in die das konvexe Teil (13f) passt, und ein Hohlteil (17i) umfasst, das außerhalb der Nut (17h) in Breitenrichtung (H1) der Abdeckung (17) vorgesehen ist.

## Revendications

1. Un bras d'essuie-glace (11) comprenant :
une tête de bras (13) ;
un couvercle (17), recouvrant la tête de bras (13) ; et
un corps de bras (14), relié de manière rotative à la tête de bras (13), dans lequel
le couvercle (17) comprend une paroi supérieure (17c) et des parties de paroi (17a, 17b) reliées à la paroi supérieure (17c) et situées en face l'une de l'autre ;
la paroi supérieure (17c) comprend une partie de fixation (17d) s'étendant vers le côté de la tête de bras (13) dans une direction de hauteur (T1) du couvercle (17) ;
les parties de paroi (17a, 17b) comprennent chacune une partie en saillie (17e) s'étendant vers le côté de la tête de bras (13) dans une direction de largeur (H1) du couvercle (17) ;
le corps de bras (14) comprend une partie de liaison (14d), qui est apte à être reliée à la tête de bras (13) ;
la tête de bras (13) est recouverte par le couvercle (17) dans un état dans lequel le corps de bras (14) et la tête de bras (13) sont reliés par la partie de liaison (14d) ; le bras d'essuie-glace étant **caractérisé en ce qu'**une partie (17f) de la pièce de fixation (17d) est en engagement avec la tête de bras (13), une autre partie (17g) de la pièce de fixation (17d) est amenée en contact avec la partie de liaison (14d), et la partie en saillie (17e) est amenée en contact avec la tête de bras (13).

2. Le bras d'essuie-glace (11) selon la revendication 1, dans lequel
la tête de bras (13) comprend une partie de logement (13d) qui est apte à loger une partie (17f) de la partie de fixation (17d).

3. Le bras d'essuie-glace (11) selon la revendication 2, dans lequel
le corps de bras (14) comprend des parties de paroi de bras (14a, 14b) agencées en face l'une de l'autre ;
la partie de liaison (14d) comprend une partie d'arbre (14e) s'étendant dans le sens de la largeur (H1) du corps de bras (14) et reliant les parties de paroi de bras (14a, 14b) qui sont en face l'une de l'autre ; et
par le fait qu'une portion (17f) de la partie de fixation (17d) est en engagement avec la tête de bras (13), une autre portion (17g) de la partie de fixation (17d) est amenée en contact avec la partie d'arbre (14e).

4. Le bras d'essuie-glace (11) selon la revendication 2 ou la revendication 3, dans lequel
la tête de bras (13) comprend une partie convexe (13f) prévue sur une surface latérale (13a, 13b) de la tête de bras (13) ; et
la partie en saillie (17e) comprend une rainure (17h) ajustée à la partie convexe (13f), et une partie creuse (17i) prévue à l'extérieur de la rainure (17h) dans le sens de la largeur (H1) du couvercle (17).
